# EUROPÄISCHE PATENTSCHRIFT

(11) **EP 3 077 749 B1**
(45) Veröffentlichungstag und Bekanntmachung des Hinweises auf die Patenterteilung: **03.01.2018**
(21) Anmeldenummer: 14805870.4
(22) Anmeldetag: 28.11.2014
(51) Int. Cl.: F27B 7/30, F27B 7/34, F27B 7/36, F27D 17/00

(54) **VORRICHTUNG UND VERFAHREN ZUM ERWÄRMEN VON ALTASPHALT-GRANULAT ZUR HERSTELLUNG VON ASPHALT**
APPARATUS AND METHOD FOR HEATING USED ASPHALT GRANULATE IN ORDER TO PRODUCE ASPHALT
DISPOSITIF ET PROCÉDÉ POUR LE RÉCHAUFFAGE D'UN GRANULAT D'ASPHALTE RÉCUPÉRÉ POUR LA PRODUCTION D'ASPHALTE

(30) Priorität: 04.12.2013 DE 102013224910
(43) Veröffentlichungstag der Anmeldung: 12.10.2016
(73) Patentinhaber: Benninghoven GmbH & Co.KG Mülheim, 54486 Mülheim / Mosel (DE)
(72) Erfinder: WAGNER, Frank, 54518 Bergweiler (DE)
(74) Vertreter: Rau, Schneck & Hübner Patentanwälte Rechtsanwälte PartGmbB
(86) Internationale Anmeldenummer: PCT/EP2014/075933
(87) Internationale Veröffentlichungsnummer: WO 2015/082341

(56) Entgegenhaltungen:
- DE-U1- 9 319 897

## Beschreibung

Der Inhalt der deutschen Patentanmeldung 10 2013 224 910.1 wird durch Bezugnahme hierin aufgenommen.

Die Erfindung betrifft eine Vorrichtung und ein Verfahren zum Erwärmen von Altasphalt-Granulat zur Herstellung von Asphalt.

Aus der DE 93 19 897 U1 ist eine Vorrichtung zum Erwärmen von rieselfähigem Material für die Asphaltherstellung bekannt. In einer Brenntrommel ist ein Innenrohr vorgesehen, um die Brennerflamme staubfrei zu halten. Die Erwärmung des rieselfähigen Materials erfolgt in einem Zwischenraum zwischen der Außenwand des Innenrohrs und der Innenwand eines Außenrohrs vor allem dadurch, dass das Material an der Außenwand des Innenrohrs aufgewärmt wird.

Es ist die Aufgabe der vorliegenden Erfindung, eine Vorrichtung zum Erwärmen von Altasphalt-Granulat zur Herstellung von Asphalt derart weiterzuentwickeln, dass ein Wärmeeintrag in das zu erwärmende Material effektiver erfolgen kann.

Diese Aufgabe wird durch die Merkmale des Anspruchs 1 gelöst. Der Kern der Erfindung besteht darin, dass eine Vorrichtung zum Erwärmen von Altasphalt-Granulat zur Herstellung von Asphalt eine Wärmeübertragungs-Einheit zum Wärmeübertragen von einer Wärmequelle auf das zu erwärmende Material aufweist. Mittels der Wärmeübertragungs-Einheit wird Wärme ausschließlich durch Wärmestrahlung von der Wärmequelle auf das zu erwärmende Material übertragen. Insbesondere erfolgt kein Kontakt zwischen der Wärmeübertragungs-Einheit und dem zu erwärmenden Material. Es ist also nicht vorgesehen, dass das zu erwärmende Material, insbesondere Altasphalt-Granulat, mit der Wärmeübertragungs-Einheit in Berührung kommt. Gleichwohl ist es möglich, dass infolge turbulenter Strömungen vereinzelte Materialpartikel mit der Wärmeübertragungs-Einheit in Kontakt kommen können. Ein derart vereinzeltes, unbeabsichtigtes Kontaktieren der Wärmeübertragungs-Einheit durch das Material ist kein Kontakt im Sinne der vorliegenden Anmeldung. Die Wärmequelle ist insbesondere ein Brenner mit einer Brennerflamme und dient für einen Wärmeeintrag in einen Drehrohrofen. Die Wärmequelle ist insbesondere an einer ersten Stirnseite des Drehrohrofens angeordnet. Die Wärmequelle ist in den Innenraum des Drehrohrofens hineinragend angeordnet. Der Drehrohrofen ist um eine Drehachse drehantreibbar. Insbesondere ist der Drehrohrofen mit einem von 0 verschiedenen Neigungswinkel gegenüber der Horizontalen geneigt angeordnet. Die Vorrichtung weist einen Material-Einlauf zum Zuführen des Materials in den Drehrohrofen auf. Die Vorrichtung weist einen Material-Auslauf zum Abführen des erwärmten Materials aus dem Drehrohrofen auf.

Vorteilhaft ist eine Vorrichtung, bei der die Wärmeübertragungs-Einheit mehrere Lamellen aufweist. Die Lamellen gewährleisten, dass das zu erwärmende Material von der Wärmequelle ferngehalten wird. Insbesondere beim Erwärmen von Altasphalt-Granulat kann dadurch vermieden werden, dass das zu erwärmende Material verbrennt. Die Lamellen sind bezogen auf die Drehachse des Drehrohrofens im Wesentlichen rohrförmig angeordnet.

Besonders vorteilhaft ist es, wenn die Lamellen in Umfangsrichtung der Drehachse überlappend angeordnet sind. Insbesondere ist es nicht erforderlich, die einzelnen Lamellen direkt miteinander zu verbinden. Dadurch ist die Herstellung der Wärmeübertragungs-Einheit vereinfacht. Darüber hinaus ist eine relative Beweglichkeit der Lamellen zueinander ermöglicht. Diese Beweglichkeit der Lamellen zueinander ist insbesondere infolge der thermischen Beanspruchung und der damit verbundenen Wärmeausdehnung der einzelnen Lamellen erforderlich, um einen störungsfreien Betrieb der Vorrichtung zu ermöglichen.

Besonders vorteilhaft ist eine Ausgestaltung, bei der zwischen zwei benachbart angeordneten Lamellen eine Überlappungsöffnung vorgesehen ist. Die Überlappungsöffnung ist insbesondere derart orientiert, dass eine Flächennormale der Überlappungsöffnung tangential bezogen auf die Drehachse des Drehrohrofens angeordnet ist. Die Überlappungsöffnung ist bezogen auf die Drehrichtung des Drehrohrofens derart orientiert, dass innerhalb der Wärmeübertragungs-Einheit angeordnetes Material durch die Überlappungsöffnung infolge der Drehbewegung der Wärmeübertragungs-Einheit automatisch und selbsttätig aus der Wärmeübertragungs-Einheit abgegeben wird. Das Material, das insbesondere unbeabsichtigt in das Innere der Wärmeübertragungs-Einheit gelangt ist, kann also durch die Überlappungsöffnung selbsttätig, infolge der Schwerkraft, herausfallen. Es ist nicht erforderlich, dass das Material aktiv entfernt werden muss.

Vorteilhaft ist eine Vorrichtung, bei der die Lamellen bei Raumtemperatur beabstandet zueinander angeordnet sind. Als Raumtemperatur gilt insbesondere eine Temperatur von etwa 20°C und insbesondere von genau 20°C. Die Lamellen sind insbesondere in radialer Richtung bezogen auf die Drehachse des Drehrohrofens beabstandet zueinander angeordnet. Insbesondere ist dadurch möglich, dass Prozessgase, die aus dem erwärmten Material im Bereich der Wärmeübertragungs-Einheit ausdünsten und/oder entgasen, durch die beabstandeten Lamellen in das Innere der Wärmeübertragungs-Einheit zu der Wärmequelle gelangen. Insbesondere werden die Gase, insbesondere Kohlenwasserstoffe, durch die beabstandeten Lamellen entsprechend dem Bernoulli-Prinzip eingesaugt, da in der Wärmeübertragungs-Einheit ein Unterdruck herrscht. Dadurch ist es möglich, dass diese Gase umweltfreundlich mitverbrannt werden können. Der Unterdruck in dem Inneren der Wärmeübertragungs-Einheit, der insbesondere das Einsaugen der Prozessgase begünstigt, basiert auf der Brennerflamme der Wärmequelle und insbesondere einer Luftgeschwindigkeit von Umluft, die der Brennerflamme zugeführt werden kann.

Besonders vorteilhaft ist eine Vorrichtung, bei der die Lamellen jeweils mittels einer Halterung an dem Drehrohrofen befestigt sind. Insbesondere ist jede einzelne Lamelle gesondert an dem Drehrohrofen befestigt. Über die Halterung ist jede Lamelle direkt mit dem Drehrohrofen verbunden. Die einzelnen Lamellen, und damit die Wärmeübertragungs-Einheit sind also drehfest mit dem Drehrohrofen bezüglich der Drehung um die Drehachse verbunden. Die Wärmeübertragungs-Einheit ist mit dem Drehrohrofen mitdrehend ausgeführt.

Vorteilhaft ist eine Vorrichtung, bei der die Wärmeübertragungs-Einheit aus Metall, insbesondere aus hochwarmfesten, insbesondere rostfreiem Stahl, hergestellt ist. Dieses Material hat sich als besonders geeignet hinsichtlich der hohen Prozesstemperaturen erwiesen. Ein derartiges Material ist unter der Bezeichnung Sicromal bekannt. Es handelt sich dabei insbesondere um einen nicht rostenden, hitzebeständigen austenitischen Chrom-Nickel-Stahl mit der Werkstoffbezeichnung 1.4841.

Vorteilhaft ist eine Vorrichtung, bei der die Wärmeübertragungs-Einheit im Wesentlichen trichterförmig ausgeführt ist, wobei ein Öffnungswinkel bezogen auf die Drehachse zwischen 0° und 30°, insbesondere etwa 20°, beträgt. Die Wärmeübertragungs-Einheit ist im Wesentlichen als Kegelstumpf ausgeführt. Die Wärmeübertragungs-Einheit ist in dem Drehrohrofen konzentrisch zur Drehachse angeordnet. Eine kleinere Stirnseiten-Öffnung des Kegelstumpfes ist der Wärmequelle zugewendet. Die Trichterform der Wärmeübertragungs-Einheit ist insbesondere für die Luftströmungsverhältnisse infolge der Verbrennung und Erwärmung innerhalb der Wärmeübertragungs-Einheit vorteilhaft.

Vorteilhaft ist eine Vorrichtung, bei der die Wärmeübertragungs-Einheit entlang der Drehachse eine Länge aufweist, die größer ist als eine Länge der Brennerflamme der Wärmequelle. Dadurch ist gewährleistet, dass kein direkter Flammenkontakt zwischen dem zu erwärmenden Material und der Brennerflamme entsteht. Das Risiko eines unbeabsichtigten Verbrennens des zu erwärmenden Materials ist dadurch reduziert.

Vorteilhaft ist eine Vorrichtung, bei der der Drehrohrofen entlang der Drehachse einen Materialmisch-Bereich und einen entlang der Material-Förderrichtung nachgelagerten Materialerwärmungs-Bereich aufweist. In dem Materialerwärmungs-Bereich sind die Wärmequelle und die Wärmeübertragungs-Einheit angeordnet. Der Materialerwärmungs-Bereich weist insbesondere eine ringförmige Querschnittsfläche auf. Die Querschnittsfläche ist senkrecht zur Drehachse orientiert. Die Querschnittsfläche ist insbesondere entlang der Drehachse veränderlich. Der Materialerwärmungs-Bereich ist durch eine äußere Hülle des Drehrohrofens einerseits und die Wärmeübertragungs-Einheit andererseits begrenzt. Der Materialerwärmungs-Bereich ist wurfblechlos ausgeführt. Das bedeutet, dass weder an der Wärmeübertragungs-Einheit noch an der Außenhülle des Drehrohrofens Wurfbleche oder andere Elemente zum Verwirbeln des zu erwärmenden Materials angeordnet sind. Die Außenseite der Wärmeübertragungs-Einheit und die Innenseite der Außenhülle des Drehrohrofens sind im Wesentlichen glatt ausgeführt. In dem Materialerwärmungs-Bereich soll das zu erwärmende Material nicht verwirbelt werden. Dadurch ist das Risiko eines unbeabsichtigten Verbrennens des zu erwärmenden Materials an einer Außenwand der Wärmeübertragungs-Einheit zusätzlich reduziert. In dem Materialmisch-Bereich sind Wurfbleche vorgesehen, um eine Durchmischung des Materials zu verbessern und einen Wärmeaustausch des Materials zu intensivieren.

Vorteilhaft ist eine Vorrichtung mit einem Rückführ-Kanal zum Rückführen von Umluft aus einem Abgasstrom zu der Wärmequelle. Eine mit der Wärmequelle verbundene Rückführ-Kanal-Öffnung ist exzentrisch zur Drehachse des Drehrohrofens angeordnet. Das bedeutet, dass die rückgeführte Umluft im Bereich der Wärmequelle bezogen auf den Drehrohrofen exzentrisch zugeführt wird. Daraus ergibt sich eine besonders vorteilhafte Luftströmung im Bereich der Wärmequelle. Diese Luftströmung weist eine sogenannte Drallwirkung auf. Durch diese Drallwirkung wird kältere Umgebungsluft mit einer Temperatur von etwa 100° C in Rotation versetzt. Aufgrund der dabei entstehenden Fliehkräfte wird die vergleichsweise kältere Luft nach außen gewirbelt. Diese nach außen gewirbelte, kältere Luft bildet eine, insbesondere äußere, Schutzzone zwischen der Brennerflamme und den einzelnen Lamellen. Die Drallwirkung ermöglicht einen zusätzlichen Schutz gegen Überhitzung. Die Drallwirkung verursacht eine etwa schraubenlinienförmige Luftströmung der kälteren Luft um die Drehachse des Drehrohrofens. Infolge des Unterdrucks im Bereich der Brennerflamme wir die Luft gleichzeitig in Richtung der Abgashaube, also axial entlang der Drehachse des Drehrohrofens eingezogen. Die Überlagerung von Rotationsbewegung und Axialbewegung resultiert in der schraubenlinienförmigen Luftströmung.

Es ist eine weitere Aufgabe der vorliegenden Erfindung, ein Verfahren zum Erwärmen von Altasphalt-Granulat zur Herstellung von Asphalt derart zu verbessern, dass das Erwärmen von Altasphalt-Granulat effektiver möglich ist.

Diese Aufgabe wird durch die Merkmale des Anspruchs 12 gelöst. Der Kern der Erfindung besteht darin, dass das Wärmeübertragen von der Wärmequelle auf das zu erwärmende Material mittels der Wärmeübertragungs-Einheit erfolgt. Die Vorteile des erfindungsgemäßen Verfahrens entsprechen im Wesentlichen den in der erfindungsgemäßen Vorrichtung, worauf hiermit verwiesen wird.

Vorteilhaft ist ein Verfahren, bei dem das Wärmeübertragen durch Wärmestrahlung, insbesondere ausschließlich durch Wärmestrahlung, erfolgt. Wärmeübertragung durch Wärmestrahlung ist effektiv. Wärmeverluste sind reduziert. Insbesondere ist ein unbeabsichtigtes Verbrennen von dem zu erwärmenden Material im Wesentlichen ausgeschlossen.

Vorteilhaft ist ein Verfahren, bei dem ein Rückführen von Umluft aus einem Abgasstrom zu der Wärmequelle zum Kühlen der Wärmeübertragungs-Einheit und/oder zum Einstellen der Prozesslufttemperatur erfolgt. Es wurde erkannt, dass der Abgasstrom für eine derartige Prozessbeeinflussung vorteilhaft verwendet werden kann.

Vorteilhaft ist ein Verfahren, bei dem ein automatisches Nachverbrennen von Prozessgasen, die bei Erwärmen des Materials entweichen, erfolgt. Die entwichenen Gase sind insbesondere Kohlenwasserstoffverbindungen.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnungen. Es zeigen:
- Fig. 1: einen Längsschnitt einer erfindungsgemäßen Vorrichtung,
- Fig. 2: eine Seitenansicht der Vorrichtung gemäß Fig. 1,
- Fig. 3: eine vergrößerte Detailansicht von Wärmequelle und Wärmeübertragungs-Einheit der Vorrichtung gemäß Fig. 1,
- Fig. 4: eine weitere Seitenansicht der Vorrichtung in Fig. 3,
- Fig. 5: eine Schnittdarstellung gemäß Schnittlinie V-V in Fig.3, und
- Fig. 6: eine Seitenansicht einer Lamelle der Wärmeübertragungs-Einheit gemäß Fig. 3.

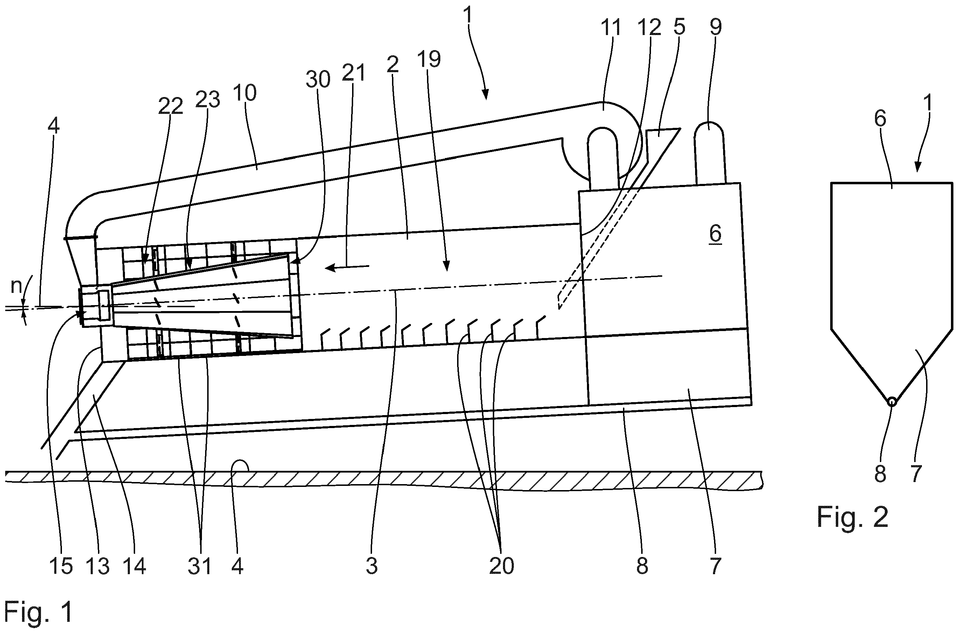

Eine in Fig. 1 bis 6 dargestellte Vorrichtung 1 dient zum Erwärmen von Altasphalt-Granulat zur Herstellung von Asphalt. Die Vorrichtung 1 umfasst einen Drehrohrofen 2, der um eine Drehachse 3 drehantreibbar ist. Der Drehrohrofen 2 ist mit der Drehachse 3 gegenüber einer Horizontalen 4 um ein von 0 verschiedenen Neigungswinkel n geneigt. Der Neigungswinkel n gegenüber der Horizontalen beträgt zwischen 1° und 5°, insbesondere etwa 3°. Der Drehrohrofen 2 ist als Zylinderrohr ausgeführt.

An einem in Fig. 1 rechts dargestellten, stirnseitigen Ende 12 des Drehrohrofens 2 ist ein Material-Einlauf 5 zum Zuführen von Material, insbesondere von zu erwärmendem Altasphalt-Granulat, in den Drehrohrofen 2 vorgesehen. An dem stirnseitigen Ende 12 des Drehrohrofens 2 ist ein Abscheideraum 6 vorgesehen. Der Abscheideraum 6 dient zum Abscheiden von Abgasen aus dem Drehrohrofen 2. Die Abgase aus dem Drehrohrofen 2 können Staubpartikel und Feinanteile enthalten, die in dem Abscheideraum 6 abgeschieden und in einem, wie in Fig. 2 gezeigt, unten angeordneten, trichterförmigen Sammelrumpf 7 gesammelt werden. Die in dem Sammelrumpf 7 gesammelten Feinanteile werden über ein Austragsrohr 8, das insbesondere gegenüber der Horizontalen 4 geneigt angeordnet ist, abgeführt und einer weiteren Verwendung zugeführt.

An dem Abscheideraum 6 ist eine Abgasleitung 9 angeschlossen, die Abgase aus dem Abscheideraum zu einer nicht dargestellten Entstaubungsanlage fördern kann. Weiterhin ist ein Rückführ-Kanal 10 zum Rückführen von Umluft aus einem Abgasstrom in dem Abscheideraum 6 in den Drehrohrofen 2 vorgesehen. In den Rückführ-Kanal 10 ist ein Ventilator 11 integriert, um eine Rückführ-Strömung von dem Abschreideraum 6 in den Drehrohrofen 2 zu fördern. An einem dem stirnseitigen Ende 12 gegenüberliegenden zweiten stirnseitigen Ende 13 des Drehrohrofens 2 ist ein Material-Auslauf 14 zum Abführen des erwärmten Materials aus dem Drehrohrofen 2 vorgesehen. Gemäß dem gezeigten Ausführungsbeispiel ist der Material-Auslauf 14 ein schräg nach unten angeordnetes Fallrohr, sodass das erwärmte Material selbsttätig aus dem Drehrohrofen 2 infolge der Schwerkraft abgeführt werden kann. Gemäß der Darstellung in Fig. 1 ist die Neigung des Material-Auslaufs 14 rein schematisch dargestellt. In der Praxis hat sich gezeigt, dass der Neigungswinkel des Material-Auslaufs 14 gegenüber der Horizontalen 4 vorzugsweise steil und insbesondere senkrecht sein sollte. Der Neigungswinkel des Material-Auslaufs 14 gegenüber der Horizontalen 4 ist insbesondere größer als 60°, insbesondere größer als 75°, insbesondere größer als 85° und insbesondere etwa 90°. Dadurch ist das selbsttätige Abführen des erwärmten Materials aus dem Drehrohrofen 2 infolge der Schwerkraft erleichtert. Der Material-Auslauf 14 ist insbesondere im Bereich eines tiefsten Punkts des Drehrohrofens 2 angeordnet. Gemäß dem gezeigten Ausführungsbeispiel ist der Material-Auslauf 14 mit dem Austragsrohr 8 verbunden. Im Bereich des Material-Auslaufs 14 weist das Material eine Temperatur von etwa 160°C auf.

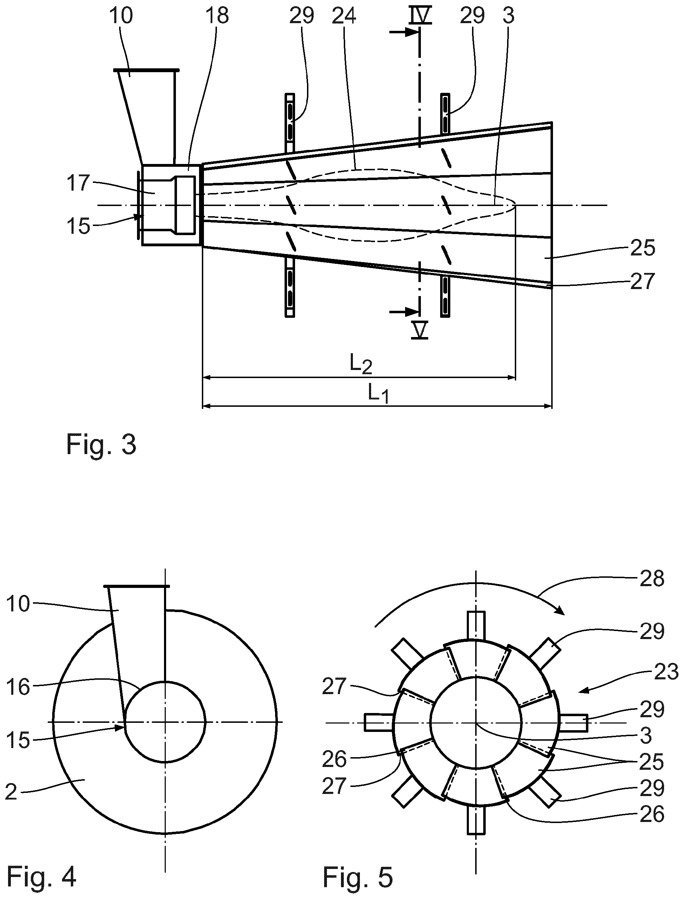

An dem stirnseitigen Ende 13 ist ferner eine Wärmequelle 15 in Form eines Brenners mit Brennerflamme angeordnet. Der Brenner 15 ist konzentrisch zur Drehachse 3 angeordnet. Der Brenner ist feststehend, also nicht um die Drehachse 3 drehbar, angeordnet. Das bedeutet, dass bei einer Drehung des Drehrohrofens 2 eine Relativbewegung zwischen dem feststehenden Brenner 15 und dem drehenden Drehrohrofen 2 resultiert. Der Rückführ-Kanal 10 ist über eine in Fig. 4 dargestellte Rückführ-Kanal-Öffnung 16 mit dem Brenner 15 verbunden. Die Rückführ-Kanal-Öffnung 16 ist bezogen auf die Drehachse 3, also bezogen auf den Brenner 15, exzentrisch angeordnet. Die über den Rückführ-Kanal 10 dem Brenner 15 rückgeführte Umluft aus dem Abgasstrom führt zu einer Drallbildung und Drallwirkung des Luftstroms im Drehrohrofen 2.

Der Brenner 15 weist einen Brennerkopf 17 auf, der von einer im Wesentlichen zylindrisch ausgeführten Rekuperatorluftkammer 18 umgeben ist. Die Rekuperatorluftkammer 18 ermöglicht die tangentiale Zuführung der Umluft zu dem Brenner 15, um die oben beschriebene Drallwirkung des Luftstroms im Drehrohrofen 2 zu ermöglichen.

Der Drehrohrofen 2 weist entlang der Drehachse 3 einen Materialmisch-Bereich 19 auf. Der Materialmisch-Bereich 19 ist benachbart zu der Stirnseite 12 des Drehrohrofens 2 zugewandt. Der Materialmisch-Bereich 19 dient zum Mischen des zu erwärmenden Materials, das über den Material-Einlauf 5 dem Drehrohrofen 2 zugeführt wird. Im Materialmisch-Bereich 19 sind mehrere Wurfbleche 20 angeordnet, die eine Durchmischung des Materials verbessern sollen. Die Wurfbleche können in verschiedener Form ausgeführt sein. Insbesondere sind entlang der Drehachse 3 mehrere Wurfbleche 20 hintereinander angeordnet. An einer inneren Mantelfläche des Drehrohrofens 2 sind entlang einer Umfangslinie um die Drehachse 3 mehrere Wurfbleche 20 angeordnet. Die Wurfbleche können an einer inneren Mantelfläche des Drehrohrofens 2 auch entlang der Drehachse 3 versetzt angeordnet sein.

Infolge der geneigten Anordnung des Drehrohrofens 2 ergibt sich eine Material-Förderrichtung 21 innerhalb des Drehrohrofens 2. Die Material-Förderrichtung ist von der dem Material-Einlauf zugewandten Stirnseite 12 des Drehrohrofens 2 zu der gegenüberliegenden Stirnseite 13 im Bereich des Material-Auslaufs 14 gerichtet. Entlang der Material-Förderrichtung 21 ist dem Materialmisch-Bereich 19 ein Materialerwärmungs-Bereich 22 nachgelagert. Der Materialerwärmungs-Bereich 22 ist dem stirnseitigen Ende 13 mit dem Brenner 15 zugewandt. Im Materialerwärmungs-Bereich 22 weist der Drehrohrofen 2 keine Wurfbleche auf.

An einer Innenseite weist der Drehrohrofen 2 im Materialerwärmungs-Bereich 22 mehrere Verschleißbleche 31 auf. Die Verschleißbleche 31 schützen die Innenseite des Drehrohrofens 2 vor Verschleiß. Die Verschleißbleche 24 sind insbesondere entlang der gesamten inneren Zylindermantelfläche im Materialerwärmungs-Bereich 22 angeordnet. Die Verschleißbleche 31 sind insbesondere an den Innenflächen des Drehrohrofens 2 angeordnet, an welchen keine Wurfbleche vorgesehen sind.

In dem Materialerwärmungs-Bereich 22 ist eine Wärmeübertragungs-Einheit 23 angeordnet, die in den Fig. 3 und 5 näher dargestellt ist. Die Wärmeübertragungs-Einheit ist trichterförmig ausgeführt. Der Öffnungswinkel des Trichters bezogen auf die Drehachse 3 beträgt zwischen 0° und 30° und insbesondere etwa 20°. Die Wärmeübertragungs-Einheit 23 ist an den Brenner 15 angeschlossen. Eine von dem Brenner 15 ausgestoßene Brennerflamme 24 ist vollständig innerhalb der Wärmeübertragungs-Einheit 23 angeordnet. Die Wärmeübertragungs-Einheit 23 weist entlang der Drehachse 3 eine Länge L₁ auf. Die Länge L₁ ist größer als eine Länge L₂ einer Brennerflamme 24 des Brenners 15.

Die Wärmeübertragungs-Einheit 23 umfasst mehrere, gemäß dem gezeigten Ausführungsbeispiel acht einzelne Lamellen 25. Die Lamellen 25 sind in Umfangsrichtung der Drehachse 3 überlappend angeordnet, sodass ein Überlappungsbereich 26 resultiert. Der Überlappungsbereich 26 zwischen zwei benachbarten Lamellen 25 umfasst eine Überlappungsöffnung 27, die eine Flächennormale aufweist, die tangential zu einer Kreislinie um die Drehachse 3 orientiert ist. Der Überlappungsbereich 26 erstreckt sich entlang der Länge L₁ der Wärmeübertragungs-Einheit 23. Der Überlappungsbereich erstreckt sich in Umfangsrichtung über etwa 5 % bis 10 % einer Umfangslänge einer einzelnen Lamelle 25. Die Überlappungsöffnung 27 ist derart orientiert, dass während des Betriebs des Drehrohrofens 2 Material, das unbeabsichtigt in das Innere des Trichters, also in das Innere der Wärmeübertragungs-Einheit 23 gelangt ist, selbsttätig, insbesondere infolge der Schwerkraft, aus der Wärmeübertragungs-Einheit 23 über die Überlappungsöffnung 27 ausgetragen wird. Eine Drehrichtung 28 der Wärmeübertragungs-Einheit 23 ist in Fig. 5 dargestellt. Das Material, das im Inneren der Wärmeübertragungs-Einheit 23 angeordnet ist, wird bei einer Drehung im Uhrzeigersinn gemäß der Drehrichtung 28 in Fig. 5 über die in Fig. 5 im linken Bildteil im Wesentlichen nach unten gerichteten Überlappungsöffnungen 27 selbsttätig ausgetragen.

Jede Lamelle 25 ist über zwei Halterungen 29 mit dem Drehrohrofen 2 fest verbunden. Die Halterungen 29 sind im Wesentlichen identisch ausgeführt. Die Halterungen 29 sorgen dafür, dass jede einzelne Lamelle 25 drehfest bezüglich der Drehachse 3 mit dem Drehrohrofen 2 verbunden ist. Insbesondere sind die Lamellen 25 nicht direkt miteinander verbunden. Die Befestigung der Lamellen 25 erfolgt ausschließlich über die Halterungen 29 an dem Drehrohrofen 2. Die Halterungen 29 sind derart ausgeführt, dass eine Anordnung der Lamellen 25 gegenüber dem Drehrohrofen 2 veränderlich möglich ist. Insbesondere dienen die Halterungen 29 zur Veränderung des Öffnungswinkels des Trichters. Die Halterungen 29 sind höhenverstellbar.

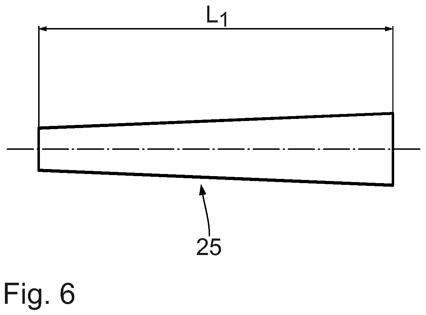

Eine einzelne Lamelle 25 ist in Fig. 6 dargestellt. Fig. 6 zeigt eine Draufsicht auf die Lamelle 25, sodass die Krümmung der Lamelle 25, wie beispielsweise aus Fig. 5 erkennbar, nicht hervorgeht. Entlang einer äußeren Mantellinie der Wärmeübertragungs-Einheit 23 verläuft die Lamelle 25 linear, sodass der Trichter der Wärmeübertragungs-Einheit 23 einen kegelförmigen, insbesondere einen kegelstumpfförmigen Verlauf hat.

Nachfolgend wird das erfindungsgemäße Verfahren zum Erwärmen von Altasphalt-Granulat zur Herstellung von Asphalt unter Erläuterung des Betriebs der erfindungsgemäßen Vorrichtung 1 näher erläutert. Über den Material-Einlauf 5 wird zu erwärmendes Altasphalt-Granulat sowie weiteres, für die Asphaltherstellung erforderliches Material dem Drehrohrofen 2 zugeführt. Dabei entstehender Staub wird im Abscheideraum 6 aufgefangen, abgeschieden und im Sammelrumpf 7 gesammelt. Über das Austragsrohr 8 kann derartiger Staub in Form von Feinteilen ausgetragen werden.

Das dem Drehrohrofen 2 zugeführte Altasphalt-Granulat wird in dem Materialmisch-Bereich 19 durch Verwendung der Wurfbleche 20 gemischt und entlang der Material-Förderrichtung 21 der Brennerflamme 24 des Brenners 15 entgegengeführt. Heiße Luft, die aus der Trichteröffnung 30 der Wärmeübertragungs-Einheit 23 in den Drehrohrofen 2 und insbesondere in den Materialmisch-Bereich gelangt, dient zum Vorwärmen des Altasphalt-Granulats. Im Materialerwärmungs-Bereich 22 weist der Drehrohrofen keine Wurfbleche 20 auf. Das Altasphalt-Granulat wird infolge der Drehung des Drehrohrofens 2 und der Neigung gegenüber der Horizontalen 4 in einem unteren Bereich des Drehrohrofens 2, also unter der Wärmeübertragungs-Einheit 23 gefördert.

In dem Materialerwärmungs-Bereich 22 erfolgt die Erwärmung des Altasphalt-Granulats auf die erforderliche Endtemperatur von etwa 450°C bis 600°C ausschließlich durch Wärmestrahlung über die Lamellen 25. Infolge der drehfesten Anbringung der Lamellen 25 über die Halterungen 29 an dem Drehrohrofen 2 kann Material, das unbeabsichtigt in den Trichter gelangt ist, über die Überlappungsöffnungen 27 wieder ausgetragen werden. In dem Materialerwärmungs-Bereich 22 können Prozessgase, insbesondere Kohlenwasserstoffverbindungen, aus dem zu erwärmenden Altasphalt-Granulat ausdünsten. Diese Prozessgase können über die Überlappungsöffnungen 27 in das Innere der Wärmeübertragungs-Einheit 23 gelangen und dort umweltfreundlich mitverbrannt werden.

Infolge der Brennerflamme 24 wird Abgasluft mit einer Temperatur von etwa 100°C entgegen der Material-Förderrichtung 21 durch den Drehrohrofen 2 zu dem Abscheideraum 6 geblasen. Abgase werden über die Abgasleitung 9 einer Entstaubung zugeführt. Ein Teil des Abgasstroms wird über einen Rückführ-Kanal 10 zu dem Brenner 15 rückgeführt. Dazu dient ein Ventilator 11, der eine Ansaugwirkung in dem Rückführ-Kanal ermöglicht. Das rückgeführte Abgas dient einerseits der Kühlung der Lamellen 25 der Wärmeübertragungs-Einheit 23. Andererseits dient die rückgeführte Luft auch zur Regulierung der Prozesslufttemperatur. Dazu kann ein nicht dargestellter Temperatursensor im Bereich der Brennerflamme 24 vorgesehen sein, der insbesondere mit einer nicht dargestellten Steuereinheit in Signalverbindung steht. Die Steuereinheit kann zudem mit dem Ventilator 11 in Signalverbindung stehen, um die Förderung von Umluft aus dem Abgasstrom, also insbesondere die Förderung von einer Rückführströmung, zu beeinflussen.

Die erfindungsgemäße Vorrichtung und das erfindungsgemäße Verfahren ermöglichen es also, dass das zu erwärmende Altasphalt-Granulat ausschließlich durch Wärmestrahlung im Materialerwärmungs-Bereich 22 erwärmt wird. Dadurch kann ausgeschlossen werden, dass Material, insbesondere in größeren Mengen, der Brennerflamme 24 zugeführt wird. Die Gefahr eines unbeabsichtigten Verbrennens des Materials ist ausgeschlossen. Wärmeübertragung durch Wärmestrahlung ist sehr effektiv.

## Patentansprüche

1. Vorrichtung zum Erwärmen von Altasphalt-Granulat zur Herstellung von Asphalt, wobei die Vorrichtung (1) umfasst
a. einen um eine Drehachse (3) drehantreibbaren Drehrohrofen (2),
b. einen Material-Einlauf (5) zum Zuführen von Material in den Drehrohrofen (2),
c. eine Wärmequelle (15) für einen Wärmeeintrag in den Drehrohrofen (2),
d. eine Wärmeübertragungs-Einheit (23) zum Wärmeübertragen von der Wärmequelle (15) auf das zu erwärmende Material und
e. einen Material-Auslauf (14) zum Abführen des erwärmten Materials aus dem Drehrohrofen (2),
**dadurch gekennzeichnet, dass**
f. die Wärmeübertragungs-Einheit (23) die Wärme der Wärmequelle (15) ausschließlich durch Wärmestrahlung auf das Material überträgt und
g. in einem Materialerwärmungs-Bereich (22) des Drehrohrofens (22) keine Wurfbleche (20) vorgesehen sind.

2. Vorrichtung nach Anspruch 1, **dadurch gekennzeichnet, dass** die Wärmeübertragungs-Einheit (23) mehrere Lamellen (25) aufweist.

3. Vorrichtung nach Anspruch 2, **dadurch gekennzeichnet, dass** die Lamellen (25) in Umfangsrichtung der Drehachse (3) überlappend angeordnet sind.

4. Vorrichtung nach Anspruch 3, **dadurch gekennzeichnet, dass** eine zwischen zwei benachbarten Lamellen (25) angeordnete Überlappungsöffnung (27) bezogen auf die Drehrichtung (3) des Drehrohrofens (2) derart orientiert ist, dass innerhalb der Wärmeübertragungs-Einheit (23) angeordnetes Material über die Überlappungsöffnung (27) automatisch aus der Wärmeübertragungs-Einheit (23) abgegeben wird.

5. Vorrichtung nach einem der Ansprüche 2 bis 4, **dadurch gekennzeichnet, dass** die Lamellen (25) bei Raumtemperatur beabstandet zueinander angeordnet sind.

6. Vorrichtung nach einem der Ansprüche 2 bis 5, **gekennzeichnet durch** eine Halterung (29) zum, insbesondere einzelnen, Befestigen einer Lamelle (25) an dem Drehrohrofen (2).

7. Vorrichtung nach einem der vorstehenden Ansprüche, **dadurch gekennzeichnet, dass** die Wärmeübertragungs-Einheit (23) aus Metall, insbesondere aus hochwarmfesten, insbesondere rostfreiem Stahl, insbesondere Stahl vom Typ 1.4841, hergestellt ist.

8. Vorrichtung nach einem der vorstehenden Ansprüche, **dadurch gekennzeichnet, dass** die Wärmeübertragungs-Einheit (23) im Wesentlichen trichterförmig ausgeführt ist, wobei ein Öffnungswinkel bezogen auf die Drehachse (3) zwischen 0° und 30°, insbesondere etwa 20°, beträgt.

9. Vorrichtung nach einem der vorstehenden Ansprüche, **dadurch gekennzeichnet, dass** die Wärmeübertragungs-Einheit (23) eine Länge (L₁) entlang der Drehachse (3) aufweist, die größer ist als eine Länge (L₂) einer Brennerflamme (24) der Wärmequelle (15).

10. Vorrichtung nach einem der vorstehenden Ansprüche, **dadurch gekennzeichnet, dass** der Drehrohrofen (2) entlang der Drehachse (3) einen Materialmisch-Bereich (19) und einen, entlang der Material-Förderrichtung (21) nach gelagerten, Materialerwärmungs-Bereich (22) aufweist.

11. Vorrichtung nach einem der vorstehenden Ansprüche, **gekennzeichnet durch** einen Rückführ-Kanal (10) zum Rückführen von Umluft aus einem Abgasstrom zu der Wärmequelle (15), wobei eine mit der Wärmequelle (15) verbundene Rückführ-Kanal-Öffnung (16) exzentrisch zur Drehachse (3) angeordnet ist.

12. Verfahren zum Erwärmen von Altasphalt-Granulat zur Herstellung von Asphalt umfassend die Verfahrensschritte
- Zuführen von Material über einen Material-Einlauf (5) in einen um eine Drehachse (3) drehantreibbaren Drehrohrofen (2),
- Mischen des Materials in dem Drehrohrofen (2),
- Wärmeeintragen in den Drehrohrofen (2) mittels einer Wärmequelle (15),
- Wärmeübertragen von der Wärmequelle (15) auf das zu erwärmende Material mittels einer Wärmeübertragungs-Einheit (23) und
- Abführen des erwärmten Materials aus dem Drehrohrofen (2) über einen Material-Auslauf (14),
**dadurch gekennzeichnet, dass**
- das Wärmeübertragen ausschließlich durch Wärmestrahlung erfolgt und
- in einem Materialerwärmungs-Bereich (22) des Drehrohrofens (22) keine Wurfbleche (20) vorgesehen sind.

13. Verfahren nach Anspruch 12, **gekennzeichnet durch** ein Rückführen von Umluft aus einem Abgasstrom zu der Wärmequelle (15) zum Kühlen der Wärmeübertragungs-Einheit (23) und/oder zum Einstellen der Prozesslufttemperatur.

14. Verfahren nach einem der Ansprüche 12 oder 13, **gekennzeichnet durch** ein automatisches Nachverbrennen von Prozessgasen, die beim Erwärmen des Materials entweichen, insbesondere Kohlenwasserstoffverbindungen.

## Claims

1. Assembly for the heating of old asphalt granulate material for the production of asphalt, the assembly (1) comprising
a. a rotary kiln (2), which is drivable for rotation about a rotational axis (3),
b. a material inlet (5) allowing material to be fed into the rotary kiln (2),
c. a heat source (15) for a heat input into the rotary kiln (2),
d. a heat transfer unit (23) configured for the transfer of heat from the heat source (15) to the material to be heated, and
e. a material outlet (14) allowing the heated material to be discharged from the rotary kiln (2),
**characterised in that**
f. the heat transfer unit (23) transfers the heat of the heat source (15) to the material only by thermal radiation, and
g. no lifter plates (20) are provided in a material heating zone (22) of the rotary kiln (22).

2. Assembly according to claim 1, **characterised in that** the heat transfer unit (23) has a plurality of fins (25).

3. Assembly according to claim 2, **characterised in that** the fins (25) are arranged such as to overlap each other in the circumferential direction of the rotational axis (3).

4. Assembly according to claim 3, **characterised in that** an overlap opening (27) arranged between two adjacent fins (25) is oriented in relation to the rotational direction (3) of the rotary kiln such that material arranged in the heat transfer unit (23) is discharged from the heat transfer unit (23) automatically via the overlap opening (27).

5. Assembly according to any one of claims 2 to 4, **characterised in that** the fins (25) are spaced from each other at room temperature.

6. Assembly according to any one of claims 2 to 5, **characterised by** a mounting (26) for the, in particular individual, fastening of a fin (25) to the rotary kiln (2).

7. Assembly according to any one of the preceding claims, **characterised in that** the heat transfer unit (23) is made of metal, in particular of high-temperature resistant, in particular stainless steel, in particular steel of the type 1.4841.

8. Assembly according to any one of the preceding claims, **characterised in that** the heat transfer unit (23) is designed substantially in the shape of a hopper, an opening angle in relation to the rotational axis (3) amounting to between 0° and 30°, in particular approximately 20°.

9. Assembly according to any one of the preceding claims, **characterised in that** the heat transfer unit (23) has a length (L₁) along the rotational axis (3) that is greater than a length (L₂) of a burner flame (24) of the heat source (15).

10. Assembly according to any one of the preceding claims, **characterised in that** seen along the rotational axis (3), the rotary kiln (2) has a material mixing zone (19) and a material heating zone (22) arranged downstream thereof along the material conveying direction (21).

11. Assembly according to any one of the preceding claims, **characterised by** a return conduit (10) allowing circulating air from an exhaust gas stream to be returned to the heat source (15), a return conduit opening (16) connected to the heat source (15) being arranged eccentrically to the rotational axis (3).

12. Method for the heating of old asphalt granulate material for the production of asphalt, the method comprising the method steps:
- feeding material into a rotary kiln (2), which is drivable for rotation about a rotational axis (3), via a material inlet (5),
- mixing the material in the rotary kiln (2),
- input of heat into the rotary kiln (2) by means of a heat source (15),
- transfer of heat from the heat source (15) to the material to be heated by means of a heat transfer unit (23), and
- discharging the heated material from the rotary kiln (2) via a material outlet (14),
**characterised in that**
- the transfer of heat occurs only by thermal radiation, and
- no lifter plates (20) are provided in a material heating zone (22) of the rotary kiln (22).

13. Method according to claim 12, **characterised by** a return of circulating air from an exhaust gas stream to the heat source (15) in order to cool the heat transfer unit (23) and/or to set the process air temperature.

14. Method according to any one of claims 12 or 13, **characterised by** an automated afterburning of process gases that escape when the material is being heated, in particular hydrocarbons.

## Revendications

1. Dispositif pour le réchauffement d'un granulat d'asphalte recyclé pour la production d'asphalte, ledit dispositif (1) comprenant
a. un four tubulaire rotatif (2) pouvant être mis en rotation autour d'un axe de rotation (3)
b. une entrée du matériau (5) pour l'alimentation du matériau dans le four tubulaire rotatif (2),
c. une source de chaleur (15) pour un apport de chaleur dans le four tubulaire rotatif (2),
d. une unité de transfert de chaleur (23) pour la transmission de chaleur de la source de chaleur (15) au matériau à réchauffer et
e. une sortie de matériau (14) pour évacuer le matériau chauffé du four tubulaire rotatif (2),
**caractérisé en ce que**
f. l'unité de transfert de chaleur (23) ne transfert la chaleur de la source de chaleur (15) au matériau que par rayonnement thermique, et
g. dans une zone de réchauffement du matériau (22), aucune tôle de projection n'est prévue.

2. Dispositif selon la revendication 1, **caractérisé en ce que** l'unité de transfert de chaleur (23) est équipée d'une pluralité de lames (25).

3. Dispositif selon la revendication 2, **caractérisé en ce que** dans la direction circonférentielle de l'axe de rotation (3), les lamelles (25) sont disposées en se chevauchant.

4. Dispositif selon la revendication 3, **caractérisé en ce qu'**une ouverture chevauchante (27) disposée entre deux lamelles adjacentes est orientée par rapport au sens de rotation (3) du four tubulaire rotatif (2) de telle manière qu'un matériau placé à l'intérieur de l'unité de transfert de chaleur (23) est évacué automatiquement de l'unité de transfert de chaleur (23) à travers l'ouverture de chevauchement (27).

5. Dispositif selon l'une des revendications 2 à 4, **caractérisé en ce qu'**à température ambiante, les lamelles sont disposées (25) espacées les unes des autres.

6. Dispositif selon l'une quelconque des revendications 2 à 5, **caractérisé par** une fixation (29) pour fixer, en particulier de façon individuelle, une lamelle (25) sur le four tubulaire rotatif (2).

7. Dispositif selon l'une quelconque des revendications précédentes, **caractérisé en ce que** l'unité de transfert de chaleur (23) est fabriquée en métal, en particulier en acier résistant aux températures élevées, en particulier en acier inoxydable, en particulier en acier du type 1.4841.

8. Dispositif selon l'une quelconque des revendications précédentes, **caractérisé en ce que** l'unité de l'unité de transfert de chaleur (23) est réalisée sensiblement en forme d'entonnoir dans lequel un angle d'ouverture par rapport à l'axe de rotation (3) est de 0° à 30°, en particulier d'environ 20°.

9. Dispositif selon l'une quelconque des revendications précédentes, **caractérisé en ce que** l'unité de transfert de chaleur (23) a une longueur (L₁) le long de l'axe de rotation (3) qui est supérieure à une longueur (L₂) d'une flamme de brûleur (24) de la source de chaleur (15).

10. Dispositif selon l'une quelconque des revendications précédentes, **caractérisé en ce que** le four tubulaire rotatif (2) comprend le long de l'axe de rotation (3) une zone de mélange du matériau (19) et le long de la direction de transport du matériau (21) une zone de réchauffement du matériau (22) située en aval.

11. Dispositif selon l'une quelconque des revendications précédentes, **caractérisé par** un conduit de recirculation (10) pour recirculer l'air de circulation d'un flux de gaz en sortie vers la source de chaleur (15) avec une ouverture du canal de recirculation (16) en liaison avec la source de chaleur (15) étant disposée de façon excentrique par rapport à l'axe de rotation (3).

12. Procédé pour le réchauffement d'un granulat d'asphalte recyclé pour la production d'asphalte, ledit procédé comprenant les étapes suivantes :
- alimentation en matériau à travers une entrée de matériau (5) dans un four tubulaire rotatif (2) pouvant être mis en rotation autour d'un axe de rotation (3),
- mélange du matériau dans le four tubulaire rotatif (2),
- apport de chaleur dans le four tubulaire rotatif (2) à l'aide d'une source de chaleur (15),
- transfert de chaleur de la source de chaleur (15) au matériau à réchauffer à l'aide d'une l'unité de transfert de chaleur (23) et
- évacuation du matériau chauffé du four tubulaire rotatif (2) à travers une sortie de matériau (14),
**caractérisé en ce que**
- le transfert de chaleur ne s'effectue que par rayonnement thermique, et
- qu'aucune tôle de projection (20) n'est prévue dans une zone de réchauffement du matériau (22).

13. Procédé selon la revendication 12, **caractérisé par** une recirculation de l'air de circulation à partir d'un flux de gaz en sortie vers la source de chaleur (15) pour refroidir l'unité de transfert de chaleur (23) et/ou pour régler la température de l'air du processus.

14. Procédé selon la revendication 12 ou 13, **caractérisé par** une postcombustion automatique des gaz du processus, qui s'échappent lors du réchauffement du matériau, en particulier des composés d'hydrocarbures.
